**Europäisches Patentamt**

**European Patent Office**

**Office européen des brevets**

(19)

(11) Numéro de publication: **0 130 121**

**A1**

(12) # DEMANDE DE BREVET EUROPEEN

(21) Numéro de dépôt: **84401283.1**

(22) Date de dépôt: **21.06.84**

(51) Int. Cl.⁴: **H 02 J 3/00**

(30) Priorité: **23.06.83 FR 8310367**

(43) Date de publication de la demande:
**02.01.85 Bulletin 85/1**

(84) Etats contractants désignés:
**AT BE CH DE FR GB IT LI LU NL SE**

(71) Demandeur: **Kneider, François**
**206 Boulevard Aristide Briand**
**F-93100 Montreuil(FR)**

(71) Demandeur: **S E F L I Société d'Equipement et de Fabrication pour la Luminescence et l'Incandescence**
**Avenue de la Paix**
**F-91420 Morangis(FR)**

(72) Inventeur: **Kneider, François**
**206, Boulevard Aristide Briand**
**F-93100 Montreuil(FR)**

(54) **Transformateur ou self inductions électriques sous-dimentionné à conduction retardée.**

(57) Transformateur ou self-induction électrique sous dimentionné à conduction retardée par un interrupteur séquentiel mis en série entre un point du transformateur ou self induction et la source d'alimentation de tension alternative.

Par ce moyen, on peut concevoir des transformateurs réduits en encombrement, en poids, en dissipation énergique;

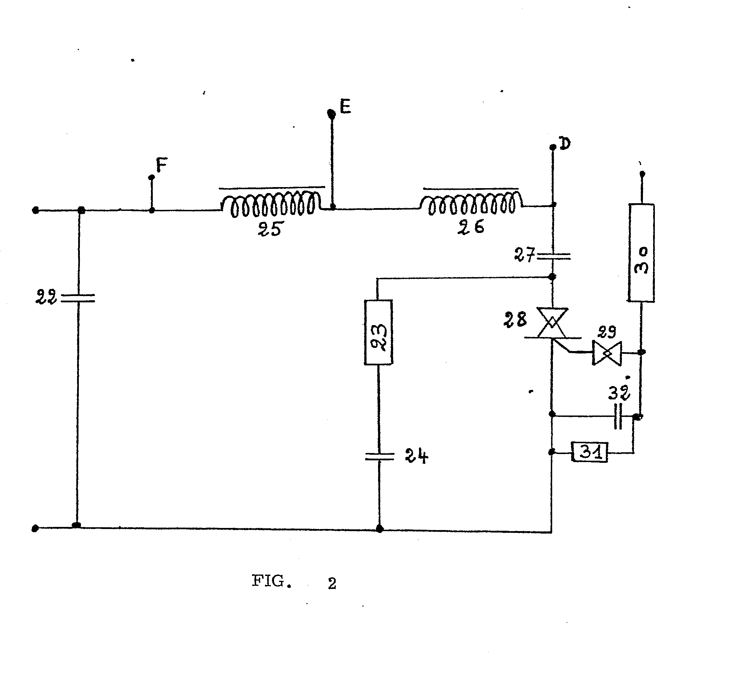

Materialisé par un triac 28, mis en série entre la source alternative et le transformateur 26 (voir Figure 2); le triac 28 a pour rôle de ne connecter le transformateur qu'après laissé passer quelques dizaines de degré de déphasage.

FIG. 2

EP 0 130 121 A1

La presente invention se rapporte aux transformateurs électriques et aux bobines de self induction, branchés sur un réseau alternatif (généralement 50 ou 60 périodes), en parallèle directement sur le réseau ou en série avec une charge.

Les transformateurs et les bobines de self induction sont très répandus et ont des applications diverses. Leur puissance de transformation dépend en grande partie de la section et de la qualité du corps magnétique utilisé et de la fréquence du réseau. La fréquence du réseau étant fixée par les compagnies ou institutions de distribution d'électricité; les procédés connus à ce jour pour déterminer la puissance d'un transformateur ne tiennent compte que de la section et de la qualité du corps magnétique, de la température de fonctionnement et de la faculté d'évacuation de la chaleur.

On peut citer aussi le brevet DE-A-2 745 586 (LICENTIA) ainsi que le brevet US-A-4 095 124 (J.J.0. FARRELL) qui tentent d'amener une réponse bien qu'ils aient un arrière-plan technologique très éloigné.

Les dispositifs cités ont l'inconvénient d'avoir pour une puissance déterminée, un poids, un volume et un prix nettement plus élevé que celui selon l'invention, que nous décrivons ci-dessous.

Le dispositif selon l'invention comprend au moins un corps magnétique sur lequel on a bobiné une inductance. Au lieu d'être branchée en permanence sur le réseau directement ou à travers la charge, elle sera branchée temporairement et séquentiellement sur le réseau, à travers un commutateur, mis en série entre un point du bobinage et le réseau, qui changera d'état à volonté.

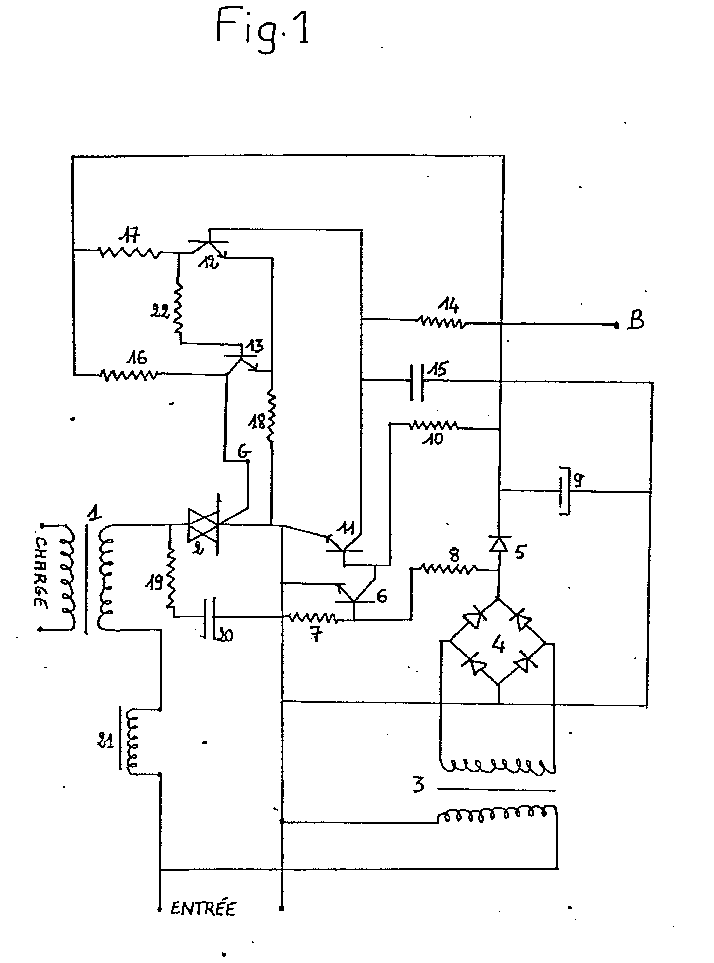

La figure 1, planche 1/2 donne à titre d'exemple indicatif et non limitatif une des réalisations possibles selon l'invention.

Le dispositif comprend un transformateur 1, dont une extrémité est branchée sur un pôle du réseau et l'autre sur le réseau à travers le commutateur 2, matérialisé comme on peut le voir sur le schèma par un triac, dont le rôle est de ne connecter le transformateur sur le réseau qu'après avoir laissé s'écouler une partie de la phase active de chaque demi période après le début de chaque alternance, déphasant ainsi le courant de quelques dizaines de degrés, ce qui rend le transformateur actif dans la partie suivante de la phase active.

Les systèmes de commande du triac après le passage à zéro sont très connus, nous indiquons dans cette même figure 1, un exemple d'application qui comprend un transformateur 3, un pont redresseur 4, une diode 5 dont le rôle est d'écréter le passage à zéro, un transistor 6, pour la mise en forme et l'amplification des tensions issues de l'écrétage, des résistances 7 et 8 pour n'appliquer qu'une petite partie du courant issu de cet écrétage au transistor 6, l'électrochimique 9, qui sert à filtrer la tension redressée, la résistance 10 qui pour rôle de créer un courant de collecteur du transistor 6, le transistor 11 qui sert à inverser la polarité des signaux du passage à zéro et qui remet le courant de la gachette du triac à zéro à travers les transistors 12 et 13, obligatoire - ment à chaque passage de la tension à zéro. Ce système serait totale - ment bloqué si on n'appliquait pas une tension positive au point B de la résistance 14, en effet, la valeur de cette résistance, en association avec celle de la capacité 15, ainsi que la tension appliquée aux bornes de la résistance 14 détermine le retard que l'on veut apporter à la conduction du triac. Comme on peut le voir, le retard est variable par rapport à ces trois paramètres; généralement on se contente de faire varier la valeur de la résistance 14 ou la tension appliquée au point B, le résultat étant le même.

La self 21 a pour objet d'atténuer les fortes pointes de courants dans le cas où la charge est à forte composante capacitive la self du même coup, atténue les perturbations parasitaire qui peuvent être générée par un courant de pointe très élevé. Dans le cas contraire, cette self peut être supprimée.

Les résistances 16 et 17 ont pour rôle de limiter respective - ment le courant des transistors 13 et 12. La résistance 17 a une valeur ohmique plus élevée que la résistance 16.

La résistance 18 étant mise en série avec la résistance 16 ou 17, elle permet d'éviter le rebondissement de la commutation à chaque changement d'état.

La capacité 20 et la résistance 19 ont pour rôle de protéger le triac contre une surtension parasitaire qui pourrait surgir et servir aussi à atténuer le rapport de la montée de tension Volt/micro seconde. Le système de commande du triac décrit ci-dessus ne fait pas l'objet du brevet et peut être remplacé par tout autre système de substitution.

Une autre réalisation possible de l'invention est de commander le triac par un diac, voir FIG. 2 PL 2.

Dans cette réalisation, le TRIAC 28 est commandé par le diac 29 et la tension de commande du diac 29 est prélevée à travers la résistance 30 qui est reliée au point D ou au point E ou au point F du montage ou un autre point.

Comme il est décrit plus haut, le triac ne conduit pas après le passage à 0 de la tension aux bornes du transformateur 26. En effet, il ne conduirait à ces bornes qu'après le passage de quelques dizaines de degrés de l'angle de conduction, la capacité 22 sert d'anti-parasite.

La self 25 a pour objet de retarder les variations rapides et la capacité 27 a pour rôle de bloquer la composante continue qui peut prendre naissance par la non Symetrie accesoirement engendrée par le couple Diac-Triac; en outre elle peut être un élément de blocage du courant à composante lente lequel courant peut saturer le circuit magnétique du transformateur 26 dans le cas où un angle de conduction necessaire est de l'ordre de 90 degrés et plus; et dans le cas où le transformateur ainsi bobiné présente très peu de spires pour la tension appliquée. Dans ces cas là, la fonction de la capacité 27 peut être utile; Dans les cas où elle n'est pas nécessaire, elle peut être supprimée.

Il existe plusieurs systèmes différents qui se substitueraient aux deux dispositifs cités plus haut, en circuit monolithiques intégrés ou hybrides sans sortie du cadre de l'invention.

Le dispositif selon l'invention permet de choisir un circuit magnétique en rapport avec les nouvelles données, qui présente l'avantage d'être d'encombrement deux fois plus réduit, voire même davantage, de même que son poids, son coût et le nombre de ses spires-volts, ainsi que les pertes thermiques qui peuvent s'accompagner d'où une puissance nominale accrue.

Si l'on se contente de performances assez limitées, à savoir accroître les performances du transformateur de 50% environ, on peut conserver le circuit magnétique d'origine en abaissant en conséquence le nombre des spires du primaire. Par contre, si l'on veut atteindre des performances plus élevées, il faut choisir un corps magnétique ayant des pertes plus réduites et pouvant fonctionner sur des fréquences plus élevées de l'ordre de 100, 200 ou 400 hz et même davantage.

Le dispositif selon l'invention peut être utilisé comme tel les transformateurs étant fabriquée en conséquence, ou peut être adapté à des transformateurs classiques exixtant déjà sur le marché et dont les performances se trouvent considérablement accrues en suralimentant l'enroulement primaire.

On peut par exemple utiliser un transformateur destiné à un réseau 110V, auquel on applique le 220V à travers ce système créant ainsi un retard de conduction approprié tel que la tension efficace aux bornes du primaire puisse atteindre 170V environ sans dommage ni échauffement éxagéré du transformateur.

Le rapport de transformation étant constant, on obtient à la sortie, à courant égal, une tension et une puissance nettement plus élevées.

Le système selon l'invention peut fonctionner à un retard prédéterminé fixé pour chaque appareil ou variable au cours de son fonctionnement. Dans ce dernier cas on peut de ce fait corriger les conséquences de la variation de la tension d'alimentation et/ou de la variation de la charge.

Il est impératif dans ce procédé que la conduction du triac ne soit pas réalisée à 100% (à 0°) à des valeurs voisines de celle-ci.

Ce système peut être appliqué à chaque transformateur au bobinage individuellement ou à un groupe de transformateurs collectivement.

En réalité, le transformateur ou la self induction utilisés selon l'invention se comportent comme s'ils étaient branchés à une fréquence nettement plus élevée que la fréquence initiale, d'où un nombre de spires moindre, une section moindre etc..

Le système selon l'invention peut trouver un immence champ d'application dans beaucoup de cas où l'on a besoin d'une self induction pour limiter le courant d'une, ou d'un transformateur, pour transformer le rapport de tension entre le réseau et l'utilisation avec ou sans isolement galvanique d'une façon fixe ou variable en cours d'utilisation.

Il va de soi que des modifications peuvent être apportées aux modes de réalisation qui viennent d'être décrits, notamment par substitution de moyens techniques équivalents, sans sortir pour cela du cadre de la présente invention.

6

. **0130121**

## REVENDICATIONS

- 1 - Transformateur sous dimentionné ayant un nombre de spires volt réduit par rapport à une tension donnée, pouvant être branché sur une source d'alimentation électrique à tension alternative trop élevée incompatible avec le dit nombre de spires pour un fonctionnement normal et prolongé, caractérisé par le fait qu'il présente un circuit de branchement temporaire à conduction retardée, mis en série entre un point du bobinage dudit transformateur et ledit réseau d'alimentation à tension alternative.

- 2 - Transformateur selon la revendication N°1 caractérisé par un commutateur matérialisé par un triac 2, un circuit de détection du passage à zéro matérialisé par un pont redresseur 4, la diode 5, la résistance 8, et le transistor 6, un circuit de déclanchement du triac matérialisé par les transistors 11, 12, 13, et les résistances 16, 17, 18, et 22.

- 3 - Transformateur selon les revendications 1 et 2, le commutateur est matérialisé par un triac et le retard de conduction est apporté par un système de diac ou tout autre système commandant le triac avec un déphasage.

- 4 - Transformateur selon les revendications 1, et 2, caracté - risé par un retard apporté variable, afin de corriger la variation de la charge ou/et la variation de la source d'alimentation, le retard ne doit pas diminuer d'une façon prolongé et durable afin de ne pas nuire à la longévité du transformateur.

- 5 - Transformateur selon les revendications 1, 2, et 3, caractérisé en ce que le transformateur est remplacé par une self induction mis en série entre la charge, la source d'alimentation, et le commuta - teur à conduction retardé.

- 6 - Transformateur selon les revendications 1, 2, 3, et 4, ca- · ractérisé par un transformateur substitué par une self induction en série avec la charge et ledit commutateur.

# Fig.1

FIG. 2

## Office européen des brevets

### RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | DE-A-2 745 586 (LICENTIA) <br> * page 1, revendication 1 * <br><br> --- | 1,2 | H 02 J   3/00 |
| D,A | US-A-4 095 124 (J.J.O. FARRELL) <br> * colonne 1, lignes 4-55 * <br><br> ----- | 1 | |

**DOMAINES TECHNIQUES RECHERCHES (Int. Cl. ³)**

H 02 J   3/00

Le présent rapport de recherche a été établi pour toutes les revendications

| Lieu de la recherche <br> LA HAYE | Date d'achèvement de la recherche <br> 26-09-1984 | Examinateur <br> VANHULLE R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82